(19) Europäisches Patentamt

European Patent Office

Office européen des brevets

(11) **EP 1 615 443 A2**

(12) **EUROPEAN PATENT APPLICATION**

(43) Date of publication:
**11.01.2006 Bulletin 2006/02**

(51) Int Cl.:
*H04N 7/26* (2006.01)

(21) Application number: **05012543.4**

(22) Date of filing: **10.06.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **14.06.2004 US 578897 P**

(71) Applicant: **Broadcom Corporation Irvine, CA 92618-7013 (US)**

(72) Inventor: **Yankilevich, Itzik 69186 Tel Aviv (IL)**

(74) Representative: **Jehle, Volker Armin Patentanwälte Bosch, Graf von Stosch, Jehle, Flüggenstrasse 13 80639 München (DE)**

(54) **Bit rate automatic gear**

(57)    A method for controlling a video stream bit rate while encoding a macroblock of a video stream having pictures comprising the step of using a quantiser_scale_code of the general form:

$$\text{quantiser\_scale\_code} = \text{ROUND} \ (A + B \ (D + \log_C \ (\text{MIN}\{VAR[luma\_0],...,VAR[luma\_n]\})))$$

with A being an adjustable gear shift parameter; and B being an adjustable gas pedal parameter; and [luma_n] being a nth luminance block of said macroblock; and D being a constant parameter depending on the encoded picture type.

Fig. 1

**Description**

**FIELD OF THE INVENTION**

The present invention relates generally to video compression, and more specifically to a method and system for controlling the video stream bit rate while encoding a video stream having pictures, and a method for encoding a video stream, especially using single pass encoding, and further to an integrated circuitry and a computer program implementing the method.

**BACKGROUND OF THE INVENTION**

Digital video products and services and devices for storage and retrieval of video streams on the Internet are ubiquitous in the marketplace. Due to limitations in digital signal storage capacity and limitations in network and broadcast bandwidth, compression of digital video signals is essential to digital video storage and transmission. As a result, many standards for compression and encoding of digital video signals have been promulgated. These standards specify with particularity the form of encoded digital video signals and, e.g., how such signals are to be decoded for presentation to a viewer.
One example of such a standard is the ISO/IEC international Standard 13818 (generally referred to as MPEG-2 format) created by the Moving Picture Experts Group (MPEG) and is described in ITU-T Recommendation H.262, ISO/IEC 13818-2: 1996 Information technology - Generic coding of moving pictures and associated audio - Part 2: Video (further referred to as 'the MPEG-2 documentation'), which is well known to the one skilled in the art. Although the MPEG-2 standard specifies a general coding methodology and syntax for generating an MPEG-2 compliant bit stream, many variations are permitted to accommodate a plurality of different applications and services such as desktop video publishing, video conferencing, digital storage media, and television broadcast. Thus, MPEG-2 allows significant discretion as to how the digital video signals are to be transformed from a native, uncompressed format to the specified encoded format. In other words, encoding steps are not rigidly defined allowing tradeoffs between video quality, compression ratio, and compute power of the encoder. As a result, many different digital video signal encoders currently exist and many approaches are used to encode digital video signals.
Further limitations and disadvantages of conventional and traditional approaches will become apparent to one of skill in the art through comparison of such systems with the present invention as set forth in the remainder of the present application and with reference to the drawings.

**SUMMARY OF THE INVENTION**

A method for controlling a video stream bit rate while encoding a video stream, a method for encoding a video stream using the method for controlling a video elementary stream bit rate, and further an encoding system and an integrated circuitry implementing the method for controlling a video stream bit rate, substantially as shown in and/or described in connection with at least one of the figures, as set forth more completely in the claims.
According to an aspect of the invention, a method for controlling a video stream bit rate while encoding a video stream having pictures is provided, the method comprising the step of using a quantiser_scale_code of the general form:

$$\text{quantiser\_scale\_code} = \text{ROUND}\left(A + B\left(D + \log_C\right.\right.$$

$$\left.\left.\left(\text{MIN}\{\text{VAR}[\text{luma\_0}];...,\text{VAR}[\text{luma\_n}]\}\right)\right)\right)$$

with

A being an adjustable gear shift parameter; and
B being an adjustable gas pedal parameter; and
[luma_n] being a nth luminance block of a macroblock of said picture with n beiing equal or larger than 1,
D being a constant depending on the picture type,
and the quantiser_scale_code being saturated.

Advantageously, C = 2.
Advantageously, n = 3.

Advantageously, said quantiser_scale_code is modified to the form:

$$\text{quantiser\_scale\_code} = \text{ROUND}\,(A+B'*\,([I\_GEAR \text{ or } P\_GEAR \text{ or } B\_GEAR] + \log_2([MIN\,[VAR\,[luma\_0],\,\ldots\,,VAR\,[luma\_n]]\,)))$$

with I_GEAR, P_GEAR and B_GEAR being numbers dependent on the type of said picture.

Advantageously, said gas pedal parameter for a current picture is adjusted by:

(a) increasing said gas pedal parameter if a measured actual size of a part of said current picture that is already encoded is larger than its target size; and
(b) decreasing said gas pedal parameter if said measured actual size of a part of said picture that is already encoded is smaller than its target size.

Advantageously, said target size of said current picture is calculated by:

Calculating a difference by subtracting a macroblock counter from a current macroblock counter; and
Calculating a first sum by adding an average macroblock size to an extension value of the average macroblock size; and
Multiplying said first difference by said first sum and a picture type factor and by an IPB_factor.

Advantageously, during the encoding process each repeated field eliminates a redundancy of a half of the average picture size; and
each time a new picture is encoded, a notification is created whether or not the last field was repeated; and
if the notification is true then a residual register (RESIDUAL) is reduced by the size of the half of the average picture size.
Advantageously, a half picture counter counts the fields in the current GOP; and
when a new GOP begins then
a maximum threshold size of the previous GOP is calculated by multiplying a size of half of an average picture with a maximum bit rate factor of said GOP and said half picture counter; and
a minimum threshold size of said previous GOP is calculated by multiplying said size of half of an average picture with a minimum bit rate factor of said GOP and said half picture counter.
Advantageously, said gear shift parameter (A) is changed from GOP to GOP by the steps of:

if said actual size of the previous GOP is larger than said maximum threshold size then said gear shift parameter is increased; and
if said actual size of said previous GOP is smaller than said minimum threshold size then said gear shift parameter is decreased.

Advantageously, a size of at least one of an I-picture, a P-picture, and a B-picture are monitored.
Advantageously, said gas pedal parameter is saturated between a minimum value and a maximum value.
Advantageously, for every macroblock,
a minimum saturation counter of consecutive times that said gas pedal parameter is saturated to its minimum value is counted; and
a maximum saturation counter of consecutive times that said gas pedal parameter is saturated to its maximum value is counted; and
when said gas pedal parameter holds a value between its minimum value and its maximum value then said minimum saturation counter and said maximum saturation counter are reset to zero; and
whereby every picture in which said minimum saturation counter is larger than a counter limit then said gear shift parameter is decreased and minimum saturation counter is reset to zero; and
whereby when said maximum saturation counter is larger than the counter limit then said gear shift parameter is increased and said maximum saturation counter is reset to zero.
Advantageously, for every GOP, a target GOP size is calculated by:

multiplying said current macroblock counter with said average macroblock size and reducing this from the actual GOP size; and
adding said current residual value, which is the new residual value from the previous iteration or which is zero at the beginning, and using the result as a new residual value; wherein
said new residual value is used to derive said extension value of the average macroblock size for the next GOP by:

summing up all of said residual values that have been processed; and
adding a previous integrator value to said new residual value that has been processed.

Advantageously, the step of summing up said residual values includes an arithmetic right shift of 19 and summing them up into an integrator value; and
the step of adding includes right shifting the new residual value by 17.

Advantageously, at least one out of the following conditions holds:

(i) the final quantiser_scale_code of each macroblock is saturated.
(ii) the gear shift parameter is saturated between a minimum value and a maximum value.
(iii) the residual value is not allowed to overflow.
(iv) said integrator value and said extension value are saturated.
(v) said gas pedal parameter is saturated between its minimum value and its maximum value.

According to a further aspect of the invention, a method for encoding a video stream using the methods mentioned above is provided.

Advantageously, the encoding is of the MPEG-2- type.

## DETAILED DESCRIPTION OF THE INVENTION

The present invention will now be described in detail with reference to a few preferred embodiments thereof as illustrated in the accompanying drawings. It is shown in:

Fig. 1 a schematic flow chart of one embodiment of the method for controlling a video stream bit rate;

Fig. 2 a schematic flow chart of one embodiment for changing the gas pedal parameter B (resp. B');

Fig. 3 a schematic flow chart of one embodiment for handling repeated fields;

Fig. 4 a schematic flow chart of one embodiment for handling a Scene Change and / or end of GOP;

Fig. 5 a schematic flow chart of one embodiment of an 'Automated Gear Changing';

Fig. 6 a schematic flow chart of one embodiment for a PID Feedback function; and

Fig. 7 a schematic flow chart of one embodiment for calculating a value for an average macroblock size extension value within the PID Feedback function of fig. 6.

In the following description, numerous specific details are set forth in order to provide a thorough understanding of the present invention. It will be apparent, however, to one skilled in the art, that the present invention may be practiced without some or all of these specific details. In other instances, well known processes and steps have not been described in detail in order not to unnecessarily obscure the present invention.
The invention generally pertains to a method and system for controlling the video stream bit rate of an encoder during the encoding process.
The invention in particular pertains to a "single pass encoding" wherein an encoder is getting uncompressed pictures as an input. Each picture at a time has a fixed and known picture rate (i.e., pictures per second). Each picture is divided into macroblocks. The encoder is typically encoding one macroblock at a time. Once it is done with a macroblock, it typically does not go back to improve this macroblock, esp. in real-time encoding. The encoding may, e.g., be performed in a raster scan order, row by row from top to bottom, each row of macroblocks from left to right.
The general concepts of video streams and encoding / decoding processes, including Group of Pictures (GOP), the structure of pictures using macroblocks, luminance blocks and a quantiser_scale_code etc. are known in the art, e.g. from the MPEG description. In the context of this invention a GOP generally means a series of one or more coded pictures intended to assist random access. Although this expression is defined only in ISO/IEC 11172-2 (MPEG-1 Video), here a similar functionality is intended to be used for all possible applications, including MPEG-2 etc.

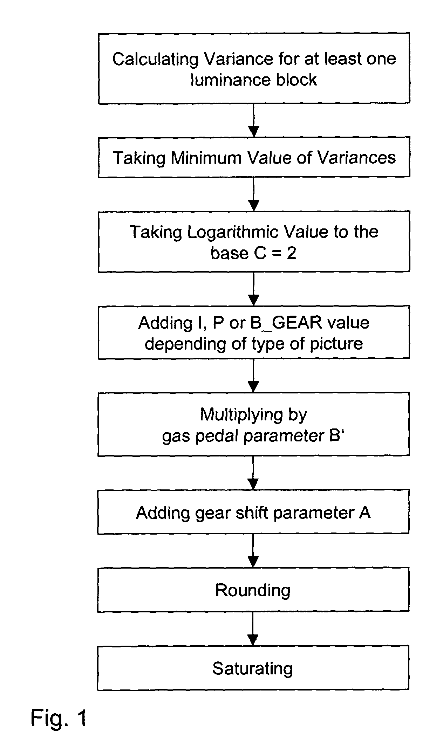

Fig. 1 shows one aspect of the present invention wherein a bit rate is controlled during the encoding process by determining an appropriate quantiser_scale_code for each macroblock.

Preferably, the present invention first determines the variance of luminance blocks for the current macroblock. Next, the minimum of these variances is determined. Then, a logarithmic value of the minimum of these variances is calculated. Finally, the logarithmic value, together with state parameters A,B', a picture type (that can be I (- Intra), P (- Predictive) or B - (Bidirectionally-predictive)) represented by respective parameters I_GEAR or P_GEAR or B_GEAR, and a rounding function as well as a saturation are used to define a appropriate quantiser_scale_code for the current macroblock.

In general, the present invention uses a higher quantiser_scale_code for a higher logarithmic result. One may, in certain cases, further improve the video quality and reduce artifact effects by manipulating the quantiser_scale_code result calculated by the invention, e.g. by reducing this result by a constant in areas of subtitles where mosquito noise artifact tends to appear. Generally, further parameters can be used to adapt the quantiser_scale_code to certain needs.

In a preferred embodiment, the present invention is run on a parallel digital processor, such as the BCM7040 Single Channel MPEG encoder or the BCM7041 Dual Channel MPEG encoder produced by Broadcom Corporation of Irvine, California, designed for the purposes of real-time video/audio compression and multiplexing, such as for MPEG encoding and the like.

In one preferred embodiment, the present invention receives a constant picture rate from the input (i.e. the source to be encoded) but is not limited to a constant picture rate. If used with a variable picture rate, the quantiser_scale_code is to be adjusted accordingly.

The special quantiser_scale_code used in this invention has at least the form:

$$\text{quantiser\_scale\_code} = \text{ROUND } (A+B*(I,P,B \_GEAR + \text{Log}_c (\text{MIN} [\text{VAR } [\text{luma\_0}], \ ... \ ,\text{VAR } [\text{luma\_3}]]))) \quad (1)$$

Here, the number of luminance blocks is [1, ... ,4] since actually there are always 4 luminance blocks in a macroblock whether it is in the 4:4:4, 4:2:2 or 4:2:0 format.

Generally, the invention is not restricted to the case of four luminance blocks but can use any number n larger than or equal to 1. If there is only one luminance block used

In one embodiment, one can use less than 4 luminance blocks, e.g. 2 or 3, to solve real-time convergence problems.

Further in eq. (1), VAR is the variance, MIN is the minimum, $\text{log}_C$ is the logarithm to the base of C, and ROUND is a rounding function. A, B, and C (log base) are three of the states of the state machine. Thus, the behavior of quantiser_scale_code according to the present invention is analogous to an automatic gear of an automobile.

' I,P,B _GEAR' is short for 'I_GEAR, P_GEAR, or B_GEAR ' wherein I_GEAR, P_GEAR, and B_GEAR are additional constant parameters that may be added alternatively as follows: I_GEAR in case of an I picture; P_GEAR in case of a P picture, and B_GEAR may be added in case of a B picture. Typically, I_GEAR <= P_GEAR <= B_GEAR. One may calibrate I_GEAR, P_GEAR and B_GEAR to specific needs. These factors might be zero.

The quantiser_scale_code of eq. (1) is saturated within limits set by the used encoding type, e.g. in a range between 1 and 31 for MPEG encoding, or at a smaller range, as needed.

Equation (1) only shows the general form, i.e. a definition of the quantiser_scale_code that has a minimum number of parameters. It is within the scope of the invention that this equation can be modified by using additional parameters.

In accordance with one embodiment of the present invention, the use of a log base of C = 2 is preferred since it is easily implemented by the '»' right shift operator. If the quantiser_scale_code has been determined on a base C different than 2 then the log base can be converted to a C = 2 base, using e. g :

$$\text{log}_C(X) = \text{log}_2(X) / \text{log}_2(C) \quad (2)$$

Then one arrives at the following equations:

$$\text{quantiser\_scale\_code} = \text{ROUND} \left( A + B' * (I,P,B \_ \text{GEAR} + \text{Log}_2 \left( \text{MIN} \left[ \text{VAR} [\text{luma\_0}], \ldots, \text{VAR} [\text{luma\_3}] \right] \right) \right),$$

$$(3)$$

with

$$B' = B / \log_2(C). \qquad (4)$$

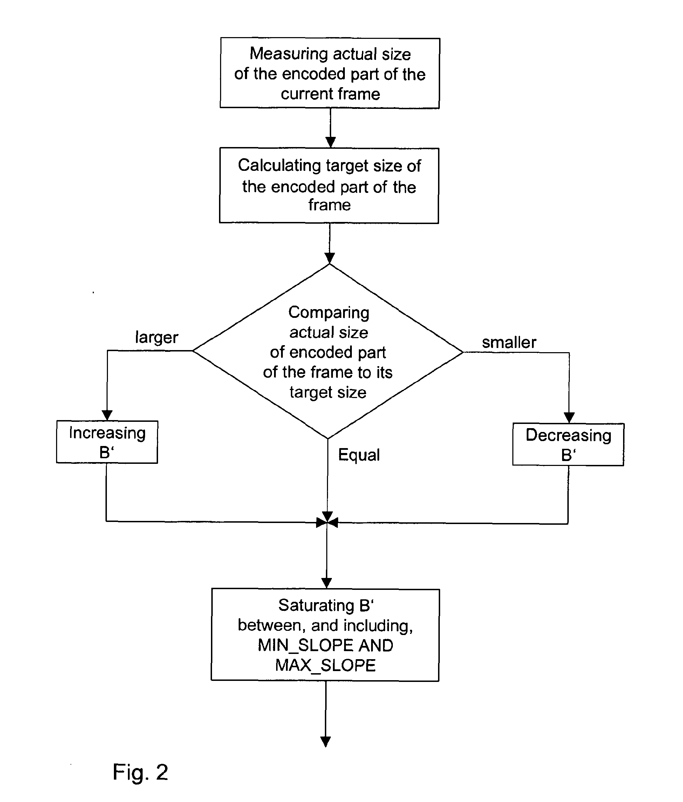

B' (or B) is similar to the gas pedal because it regulates the bit rate in a gradual fashion, and A is similar to the gear shift in that it changes the bit rate in a more aggressive manner. Accordingly, B' is referred to as a 'gas pedal parameter' and A is referred to as a 'gear shift parameter'. During encoding, the gas pedal parameter B' is preferably being updated from macroblock to macroblock, e.g. it is updated each time before a macroblock quantisation, as will be set out in more detail in fig. 2. The gear shift parameter A is preferably updated each time before a new picture is being encoded, as described in more detail further below.

Of course, B' and B are similar in behavior and can be used interchangeably, with values respectively scaled. Further description will be made with reference to B' for reasons of brevity only. Also the I,P,B_GEAR parameters are subject to modification due to change of logarithmic base.

Each picture type (I picture, P picture, B picture) has a target average picture type size: I_size, P_size, and B_size, respectively, with a relative size factor, i.e. I_factor, P_factor, and B_factor, respectively. In one case, each GOP has one I picture, 4 P pictures, and 10 B pictures, i.e. 15 pictures in total, e.g. of a IPBB structure in the presentation order of: I BB P BB P BB P BB P BB.

To achieve a target bit rate and maintain a good video quality, in one embodiment of the invention different amount of bits are allocated to each picture type (i.e.: I, P and B). The goal is firstly, to keep the GOP size, and secondly to keep the size ratio between pictures by their types using picture factors. This can be achieved using the following equations:

$$\text{Average picture size} = \text{bit rate} / \text{picture rate} \qquad (5)$$

$$\text{Average picture size} = \text{GOP\_size (bits)} / \text{GOP\_size (pictures)} \qquad (6)$$

$$\text{I\_picture\_size} = x * \text{I\_factor} \qquad (7)$$

$$\text{P\_picture\_size} = x * \text{P\_factor} \qquad (8)$$

$$\text{B\_picture\_size} = x * \text{B\_factor}, \qquad (9)$$

with x being called the base picture size (which is not the average picture size).

For example, in order to achieve I_picture_size = 2* P_picture_size and P_picture_size = 4* B_picture_size, one can use: I_factor = 8, P_factor = 4, B_factor = 1. Then:

$$\text{GOP\_size (bits)}=1 * \text{I\_picture\_size} + 4 * \text{P\_picture\_size} + 10 * \text{B\_picture\_size} \tag{10}$$

$$\text{GOP\_size (pictures)} = 1 + 4 + 10 = 15 \tag{11}$$

Comparison of (5) and (6) yields:

$$x = (\text{bit rate} / \text{picture\_rate})*15 / (1* \text{I\_factor}+4*\text{P\_factor}+10*\text{B\_factor})$$

$$= \text{Average picture size}*(1+4+10)/(1* \text{I\_factor}+4*\text{P\_factor}+10*\text{B\_factor}) \tag{12}$$

Define

$$\text{IPB\_factor}=(1+4+10) / (1* \text{I\_factor}+4*\text{P\_factor}+10*\text{B\_factor}), \tag{13}$$

which can be generalized to

$$\text{IPB\_factor}= (\#I+\#P+\#B) / (\#I* \text{I\_factor}+\#P*\text{P\_factor}+\#B*\text{B\_factor}) \tag{14}$$

wherein #T = number of T pictures in the respective GOP T= I, P or B.
With this, one gets:

$$x = \text{Average picture size} * \text{IPB\_factor} \tag{15}$$

with the average picture size defined as bit rate / picture rate. The target average macroblock size is then attained by dividing the target bit rate by the picture rate and by the number of macroblocks per picture. This represents the average macroblock size MB_SIZE.
While encoding a picture, as shown in fig. 2, its actual size is measured and compared to the target size.
The current target size may be calculated by:

$$\text{Current\_Target\_Size} = (\text{MB\_CNT}- \text{PREV\_MB\_CNT}) *$$

$$\text{Picture\_Type\_Factor} * \text{IPB\_factor} * (\text{MB\_SIZE} + \text{MB\_SIZE\_FIX}), \tag{16}$$

wherein
MB_CNT is a 'current macroblock' counter that is increased from macroblock to macroblock. MB_CNT is counting the encoded macroblocks from the beginning of the current encoded GOP, MB_CNT is increased by an increment, typically by 1, for each encoded macroblock. The Current_Target_Size may be calculated (and then compared against said actual size) every macroblock or at a lower frequency or alternating frequency, e. g. every N macroblocks or every N system clock cycles etc. when N is a constant number. One may set this frequency according to his needs and tradeoffs one wants to achieve between bit rate fluctuations and video quality,
and PREV_MB_CNT is a 'previous macroblock' counter that saves the value of the current macroblock counter (MB_CNT) when beginning to encode the picture. The current macroblock counter MB_CNT is reset to zero for every new GOP, and Picture_Type_Factor is determined by type of the picture being encoded: I_factor for I-picture, P_factor for P-picture and B_factor for B-picture, and

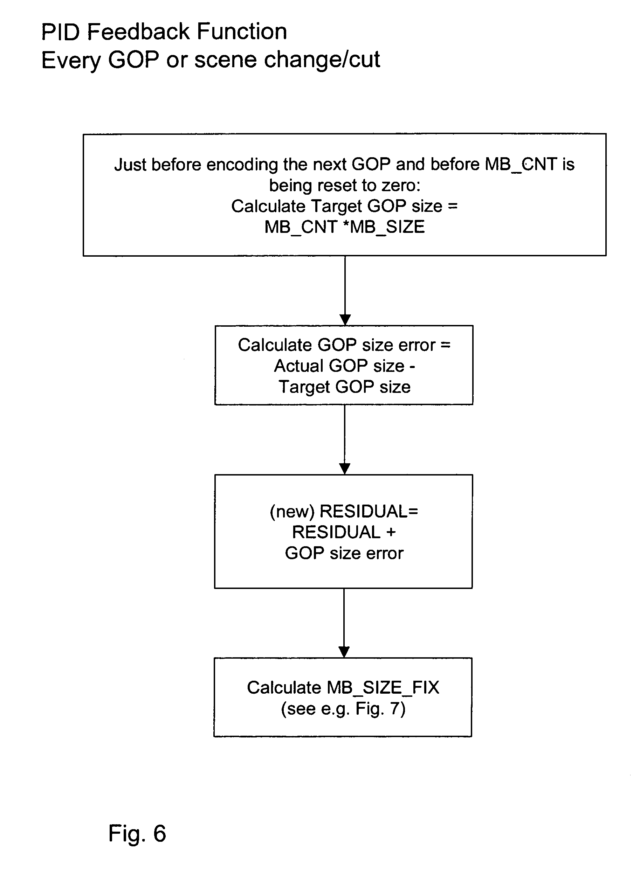

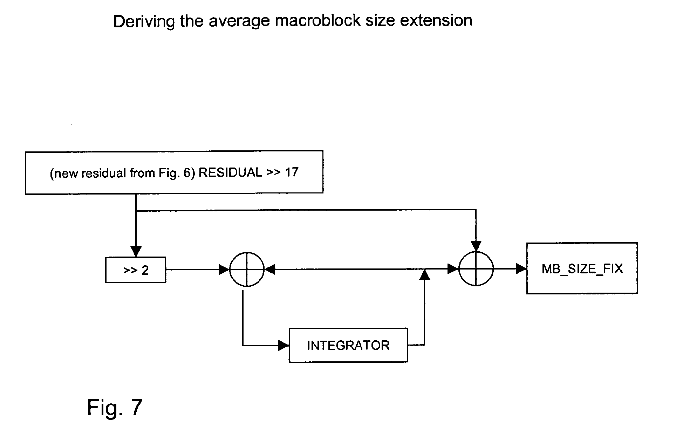

MB_SIZE_FIX is an extension of the average macroblock size. It is derived from the residual which is the difference between the actual video elementary stream size and its target size, see fig. 7 for further details. The residual is calculated every GOP. In this way, the residual which is calculated from the previous GOPs is spread out to the upcoming macroblocks. This is calculated once per GOP just before encoding the next GOP.

During the encoding process of the current picture, the size of the encoded portion increases. If the actual size of the part of the picture that is already encoded is larger than the target size of this portion (Current_Target_Size) then the gas pedal parameter B' is increased. In one embodiment, when Current_Target_Size is calculated and then compared against said actual size every macroblock, B' is increased by 1/256. One may use a different increment size for a different relation of comparing frequency of target vs. actual sizes. One may use any other time resolution (then for each macroblock) during the encoding process, e.g. in every n (n being a constant positive number) encoded macroblocks or in every n system clock cycles etc., for example when following the flow chart in Fig. 2.

This results in reducing the actual size of the other portion of the picture (i.e., the rest of the picture) just about to be encoded.

If the actual size is smaller than its target size, the gas pedal parameter B' is decreased. In one embodiment, when Current_Target_Size is calculated and then compared against said actual size every macroblock, B' is decreased by 1/256. One may use a different decrement size, e.g. for a different relation of comparing frequency of target vs. actual sizes. This results in an increase of the actual size of the other portion of the picture (i.e., the rest of the picture) just about to be encoded.

This process represents a fine-tuning of the bit rate on the macroblock level, which is analogous to the gas pedal. In one embodiment of the invention, this means comparing the corresponding target size and actual size each time a macroblock is encoded. One skilled in the art can adjust the cycle or frequency of the comparison to be performed, e.g., each N macroblocks or N hardware clock cycles etc. wherein N is a counter.

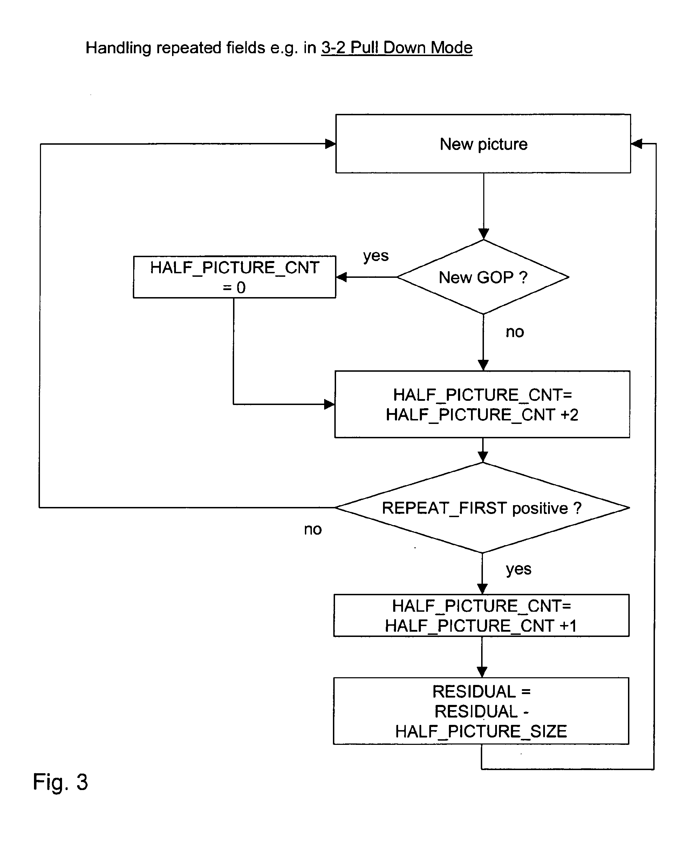

Now referring to fig. 3, in a preferred embodiment for using repeated fields , e. g. for handling a '3-2 Pull Down Mode' or 'Inverse Telecine' etc., each repeated field eliminates an average redundancy of a half of the average picture size (HALF_PICTURE_SIZE), e.g. in eq. (5 or 6). Each time a new picture is encoded, a notification flag (REPEAT_FIRST) specifies whether or not a field was repeated. Repeated fields are, e.g., generated by a telecine machine. The encoding algorithm may detect a repeated field and take advantage of this redundancy. The repeated field notification flag supports the inverse telecine process. In this way, the eliminated redundancy of the repeated field is being taken care of in the bit rate convergence process. If the notification flag (REPEAT_FIRST) is true then the residual (RESIDUAL) is reduced by half of the average picture size (HALF_PICTURE_SIZE). This fluctuation in the residual value, which occurs every repeated field and which may have a repeated pattern, can then be noticed and taken into consideration every GOP by deriving the MB_SIZE_FIX extension, e.g. according to the PID feedback in fig.7. In this way, regarding 3-2 pulldown, the algorithm encodes 5 input pictures as if they were 4 pictures, thereby regarding bit consumption and still maintaining the assumption of the constant picture rate. Each field is counted in a half picture counter (HALF_PICTURE_CNT). For each picture the counter is either incremented by 2 or 3. Two stands for 2 fields (top and bottom) of the picture and three also includes the repeated field. The half picture counter (HALF_PICTURE_CNT) is being reset to zero each time a new GOP is about to be encoded, see fig. 3 as an example.

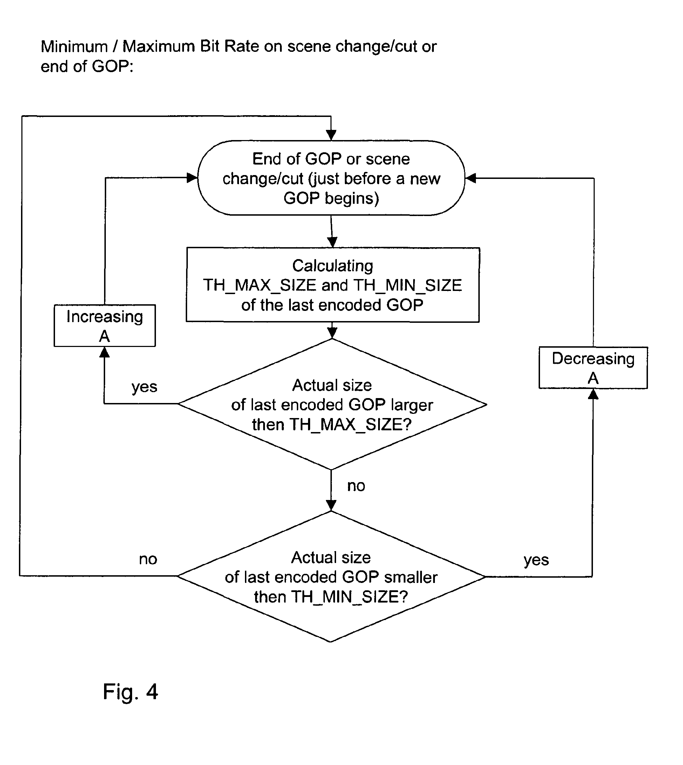

In one embodiment of the application, the GOP size is 15 pictures, but sometimes during a scene change, the GOP ends before the 15th picture. This case is preferably be taken into consideration using the following process (see fig. 4), although this invention is not restricted to a certain number of pictures:

The half picture counter HALF_PICTURE_CNT is used to count the fields (half pictures) in the current GOP, see fig. 3 as an example.

When a new GOP begins, the maximum threshold size (TH_MAX_SIZE) of the previous GOP is calculated using a size of a half of the average picture size (HALF_PICTURE_SIZE) and a maximum bit rate factor (MAX_GOP_BITRATE_FACTOR) of the GOP and the count number of half of the input pictures to be encoded (HALF_PICT_CNT) by:

$$\text{TH\_MAX\_SIZE} = \text{HALF\_PICTURE\_CNT} * \text{HALF\_PICTURE\_SIZE} * \text{MAX\_GOP\_BITRATE\_FACTOR}, \tag{17}$$

when MAX_GOP_BITRATE_FACTOR > 1;
and the minimum threshold size (TH_MIN_SIZE) of the previous GOP is calculated using:

$$TH\_MIN\_SIZE = HALF\_PICTURE\_CNT* HALF\_PICTURE\_SIZE*$$

$$MIN\_GOP\_BITRATE\_FACTOR, \hspace{3cm} (18)$$

with MIN_GOP _BITRATE_FACTOR representing the minimum bit rate factor and 0 < MIN_GOP _BITRATE_FACTOR < 1.

The value of the gear shift parameter A may be changed from GOP to GOP in the following manner:

If the actual size of the previous GOP is larger than the maximum threshold size (TH_MAX_SIZE), the gear shift parameter A is increased by 1 in one embodiment of the application thereby reducing the actual size of the current new GOP and converging into the target average bit rate. One may use a different increment size than 1 e.g. derive the increment size from said actual size and TH_MAX_SIZE as well without deviating the scope of the invention. If the actual size of the previous GOP is smaller than the minimum threshold (TH_MIN_SIZE), gear shift parameter A is decreased by 1 in one embodiment of the application which in turn increases the actual size of the current new GOP and allowing the video elementary stream bit rate to converge into the target average bit rate. One may derive the decrement size from said actual size and TH_MIN_SIZE as well without deviating the scope of the invention.

This process is a more aggressive tuning of the bit rate in the GOP level (i.e., analogous to changing gears).

For a controlling of maximum I and P picture sizes, the actual size of the I and P pictures can be monitored, and:

- If the actual size of the I picture is larger than the threshold value of the I picture, namely I_PICTURE_TH, then A is increased by 1 in one embodiment of the application although one may use another increment which can, for example, be derived from said actual size and I_PICTURE_TH as well without deviating the scope of the invention. In one embodiment of the application I_PICTURE_TH can be calculated in the following manner: Suppose one allows 2.5M [bit/sec] fluctuation above the target average bit rate. In this case I_PICTURE_TH is approximately (bit rate+2.5M[bit/sec]) / picture_rate) * I_factor * IPB_factor

- If the size of the P picture is larger than a certain threshold value of the P picture, namely P_PICTURE_TH, then A is increased by 1 in one embodiment of the application although one may derive the increment size from said actual size and P_PICTURE_TH as well without deviating from the scope of the invention. In one embodiment of the application P_PICTURE_TH can be calculated in the following manner: Suppose one allows 2.5M[bit/sec] fluctuation above the target average bit rate. In this case P_PICTURE_TH is approximately (bit rate+2.5M[bit/sec])/picture_rate)*P_factor*IPB_factor

This mechanism assists in limiting the bit rate peaks five (1 I-picture and 4 P-pictures) times per 15 pictures in IPBB GOP structure of 15 pictures, for example.

One may also monitor the size of the B-picture as well although this might make the thresholds calibration more difficult. Also, one may set minimum thresholds for I-picture, P-picture and B-picture as well, e.g. if the picture size of type X is smaller than minimum threshold for picture of type X than said gear shift parameter is decreased. Said monitoring should use appropriate increment and / or decrement sizes.

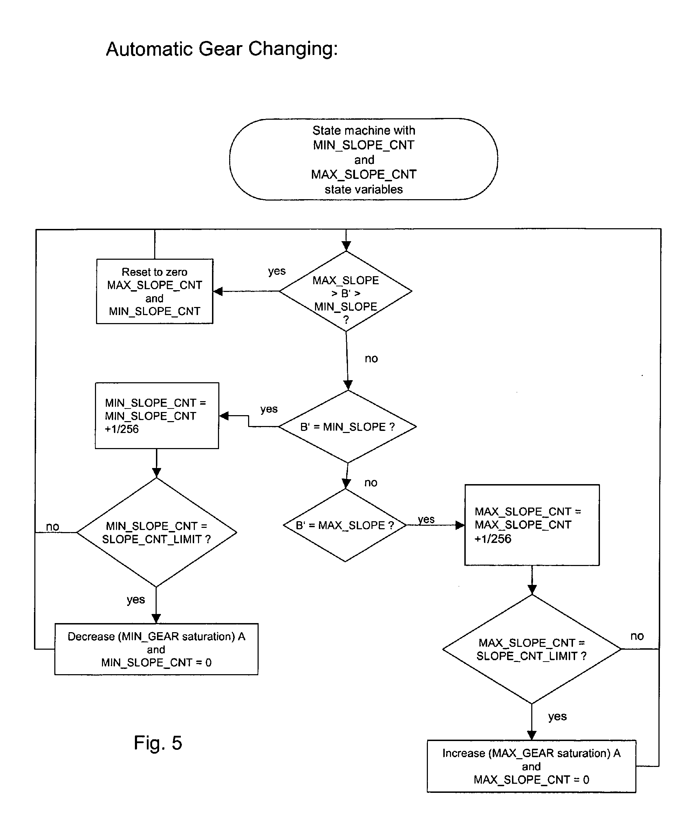

For a change of the state parameter A, the following mechanism that is shown in fig. 5 might be used ('automated gear changing'):

The gas pedal B' is allowed having a value between and including a minimum value (MIN_SLOPE) and a maximum value (MAX_SLOPE); and

a 'minimum saturation counter' (MIN_SLOPE_CNT) of consecutive times that the gas pedal parameter B' is saturated to its minimum value (MIN_SLOPE) is counted in the minimum saturation counter (MIN_SLOPE_CNT); and

a 'maximum saturation counter' (MAX_SLOPE_CNT) of consecutive times that the gas pedal parameter B' is saturated to its maximum value (MAX_SLOPE) is counted, as described later, and;

when the gas pedal parameter B' holds a value between the minimum value (MIN_SLOPE) and the maximum value (MAX_SLOPE), those counters (MIN_SLOPE_CNT, MAX_SLOPE_CNT) are reset to zero; and

whereby each time after encoding a picture and just before encoding the next one when the minimum saturation counter (MIN_SLOPE_CNT) is larger than a counter limit (SLOPE_CNT_LIMIT) then A is decreased, with the preferred decrement of 1, and the minimum saturation counter (MIN_SLOPE_CNT) is reset to zero (after all the macroblocks of this picture have been encoded, i.e., in one embodiment of the application, A is allowed to change only between pictures, i.e. after encoding a picture and before the next one is being encoded). One can set SLOPE_CNT_LIMIT according to his needs and tradeoffs between bit rate fluctuations and video quality one wants to achieve; and

whereby when the maximum saturation counter (MAX_SLOPE_CNT) is larger than the counter limit (SLOPE_CNT _LIMIT) then A is increased, preferably by 1, and the maximum saturation counter (MAX_SLOPE_CNT) is reset to zero (after all the macroblocks of this picture have been encoded, i.e., in one embodiment of the application, A is allowed to change only between pictures i.e. after encoding a picture and before the next one is being encoded). One may use a different SLOPE_CNT_LIMIT for the MAX_SLOPE_CNT than the SLOPE_CNT_LIMIT for the MIN_SLOPE_CNT, e.g. MAX_SLOPE_CNT_LIMIT and MIN_SLOPE_CNT_LIMIT in order to achieve asymmetrical bit rate convergence.

Generally, the bit rate algorithm parameters such as MAX_SLOPE, MIN_SLOPE, MAX_SLOPE_CNT etc. can be adjusted to achieve a bit rate convergence and a suitable trade-off between constant bit rate and variable bit rate.
To include a 'Proportional, Integral, and Derivative (PID)' feedback function (fig. 6), for every GOP, the target GOP size = (macroblock counter * average macroblock size) = (MB_CNT* MB_SIZE) is calculated and is reduced from the actual GOP size resulting in the 'GOP size error'. Typically, the macroblock counter (MB_CNT) is incremented by 1 for each encoded macroblock in the GOP and is being reset to zero at the beginning of each GOP. The current 'GOP size error' value is added to the previous residual and the result is a new residual value (RESIDUAL). The new residual value (RESIDUAL) is used to derive the extension of the average macroblock size (MB_SIZE_FIX) for the next GOP: This can be done in the following manner (fig. 7):

an integrator value (INTEGRATOR) holds the sum of all residual values (RESIDUAL), preferably - in one embodiment of the application - via an arithmetic right shift of 19 of the residual value. One may, instead of right shifting by 19, also divide by a value or perform some adaptive adjustment to the PID feedback.

The previous integrator value (from the previous GOP iteration) (INTEGRATOR) is added to the residual value (RESIDUAL), preferably - in one embodiment of the application - via an arithmetic right shift of 17 of the residual value. One may use other methods, e.g., divide by a value or perform some adaptive adjustment to the PID feedback, instead of right shifting by 17 (proportional part of the PID feedback). The result is the new extension value of the average macroblock size (MB_SIZE_FIX).

To incorporate saturation and convergence, the following condition may be set alone or in combination:

The quantiser_scale_code of each macroblock is preferably saturated to a valid value, e. g. between 1 and 31 for the MPEG-2 standard. One may, e.g., saturate to a narrower range of values in order to avoid extreme cases of very low or very high bit rates according to his encoding algorithm, quantization matrixes etc..

- The value of A is saturated between its minimum value (MIN_GEAR) and its maximum value (MAX_GEAR). One may set MIN_GEAR and MAX_GEAR in such a manner that avoids extreme cases of very low or very high bit rates according to his encoding algorithm, quantization matrixes, bit rate convergence demands etc..

- The residual value (RESIDUAL) is not allowed to overflow. In one embodiment, the residual value may be implemented using a RESIDUAL register that has enough bits to hold big signed numbers. Overflow should not be allowed and thus saturation may be implemented for extreme cases, i.e. saturating the RESIDUAL register to its maximum or minimum signed values instead of overflowing.

- The integrator value (INTEGRATOR) and the extension value (MB_SIZE_FIX) may be, in one embodiment of the application, saturated between - MB_SIZE and + MB_SIZE, (MB_SIZE= bit rate / picture rate / macroblocks per picture). Generally, one may saturate said values to other values, according to his needs. One can tune these saturation values, among others, according to its specific encoder settings (target bit rate, resolution etc.), e. g. also asymmetrically.

- B' (SLOPE) is saturated between MIN_SLOPE and MAX_SLOPE.

When these saturations (along with the thresholds mentioned earlier) are set and performed correctly, the algorithm is allowed to converge to the correct bit rate within in a reasonable response time and maintains very good quality video.

In a preferred embodiment of the invention one may use the following values for NTSC SD (standard definition) encoding:

I_factor=6; P_factor=6; B_factor=4; MIN_SLOPE=1.125;

MAX_SLOPE=1.32; SLOPE_CNT_LIMIT=3000;

I_GEAR=3; P_GEAR=7; B_GEAR=9;

MAX_GOP_BITRATE_FACTOR=1.25;

MIN_GOP_BITRATE_FACTOR=0.75;

MIN_GEAR=-9; MAX_GEAR=31;

In one embodiment, the above described methods are implemented within an integrated circuitry, e.g. an ASIC or any other suitable hardware.

While the invention has been described with reference to certain embodiments, it will be understood by those skilled in the art that various changes may be made and equivalents may be substituted without departing from the scope of the invention which also includes a combination of preferred embodiments and variations. In addition, many modifications may be made to adapt a particular situation or material to the teachings of the invention without departing from its scope. Therefore, it is intended that the invention not be limited to the particular embodiment disclosed, but that the invention will include all embodiments falling within the scope of the appended claims.

**Claims**

1. A method for controlling a video stream bit rate while encoding a video stream having pictures, the method comprising the step of using a quantiser_scale_code of the general form:

$$\text{quantiser\_scale\_code} = \text{ROUND} (A + B (D + \log_C (\text{MIN}\{VAR[luma\_0];...,VAR[luma\_n]\})))$$

with

A being an adjustable gear shift parameter; and
B being an adjustable gas pedal parameter; and
[luma_n] being a nth luminance block of a macroblock of said picture with n beiing equal or larger than 1,
D being a constant depending on the picture type,
and the quantiser_scale_code being saturated.

2. The method of claim 1 wherein C = 2.

3. The method of claim 1 wherein n = 3.

4. The method of claim 2 wherein said quantiser_scale_code is modified to the form:

$$\text{quantiser\_scale\_code} = \text{ROUND} (A + B'^* ([I\_GEAR \text{ or } P\_GEAR \text{ or } B\_GEAR] + \log_2([MIN [VAR [luma\_0], ... ,VAR [luma\_n]] )))$$

with I_GEAR, P_GEAR and B_GEAR being numbers dependent on the type of said picture.

**5.** The method of claim 1 wherein said gas pedal parameter for a current picture is adjusted by:

   (a) increasing said gas pedal parameter if a measured actual size of a part of said current picture that is already encoded is larger than its target size; and
   (b) decreasing said gas pedal parameter if said measured actual size of a part of said picture that is already encoded is smaller than its target size.

**6.** A method for encoding a video stream using the method of claim 1.

**7.** The method of claim 6 wherein the encoding is of the MPEG-2-type.

**8.** An encoding system using the method of claim 1.

**9.** An integrated circuitry implementing the method of claim 1.

**10.** A computer program able to execute the method of claim 1.

```
┌─────────────────────────────────────┐
│   Calculating Variance for at least one │
│            luminance block           │
└─────────────────────────────────────┘
                    │
                    ▼
┌─────────────────────────────────────┐
│     Taking Minimum Value of Variances │
└─────────────────────────────────────┘
                    │
                    ▼
┌─────────────────────────────────────┐
│     Taking Logarithmic Value to the  │
│             base C = 2               │
└─────────────────────────────────────┘
                    │
                    ▼
┌─────────────────────────────────────┐
│    Adding I, P or B_GEAR value       │
│     depending of type of picture     │
└─────────────────────────────────────┘
                    │
                    ▼
┌─────────────────────────────────────┐
│          Multiplying by             │
│       gas pedal parameter B'        │
└─────────────────────────────────────┘
                    │
                    ▼
┌─────────────────────────────────────┐
│      Adding gear shift parameter A   │
└─────────────────────────────────────┘
                    │
                    ▼
┌─────────────────────────────────────┐
│              Rounding               │
└─────────────────────────────────────┘
                    │
                    ▼
┌─────────────────────────────────────┐
│             Saturating              │
└─────────────────────────────────────┘
```

Fig. 1

```
┌─────────────────────────┐
│   Measuring actual size │
│  of the encoded part of the │
│      current frame      │
└─────────────────────────┘
             │
             ▼
┌─────────────────────────┐
│  Calculating target size of │
│  the encoded part of the │
│         frame           │
└─────────────────────────┘
             │
             ▼
```

```
                  Comparing
  larger          actual size          smaller
          ◇     of encoded part    ◇
                of the frame to its
                   target size
                        │
                      Equal
```

```
┌──────────┐                        ┌──────────┐
│ Increasing│                        │ Decreasing│
│    B'     │                        │    B'     │
└──────────┘                        └──────────┘
```

```
┌─────────────────────────┐
│      Saturating B'      │
│   between, and including, │
│    MIN_SLOPE AND        │
│      MAX_SLOPE          │
└─────────────────────────┘
             │
             ▼
```

Fig. 2

Handling repeated fields e.g. in <u>3-2 Pull Down Mode</u>

Fig. 3

Minimum / Maximum Bit Rate on scene change/cut or
end of GOP:

**Fig. 4**

Automatic Gear Changing:

Fig. 5

PID Feedback Function
Every GOP or scene change/cut

Just before encoding the next GOP and before MB_CNT is
being reset to zero:
Calculate Target GOP size =
MB_CNT *MB_SIZE

Calculate GOP size error =
Actual GOP size -
Target GOP size

(new) RESIDUAL=
RESIDUAL +
GOP size error

Calculate MB_SIZE_FIX
(see e.g. Fig. 7)

Fig. 6

Deriving the average macroblock size extension

Fig. 7